# EUROPÄISCHE PATENTSCHRIFT

(11) **EP 1 464 428 B1**
(45) Veröffentlichungstag und Bekanntmachung des Hinweises auf die Patenterteilung: **25.01.2006**
(21) Anmeldenummer: 04003351.6
(22) Anmeldetag: 14.02.2004
(51) Int. Cl.: B23B 49/00

(54) **Bohrlochtiefenerkennung durch Lichtstrahl**
Determination of the depth of a hole by means of light beams
Détection de la profondeur d'un trou par faisceau lumineux

(30) Priorität: 03.04.2003 DE 10315144
(43) Veröffentlichungstag der Anmeldung: 06.10.2004
(73) Patentinhaber: ROBERT BOSCH GMBH, 70442 Stuttgart (DE)
(72) Erfinder: Huser, Werner, 70771 Leinfelden-Echterdingen (DE)
(74) Vertreter: Grosse, Rainer

(56) Entgegenhaltungen:
- DE-A- 2 838 968

## Beschreibung

Die Erfindung betrifft eine Vorrichtung zur Erkennung oder Feststellung des Erreichens einer voreingestellten Bohrlochtiefe in einem mit einem Bohrwerkzeug eines Bohrgeräts von einer Werkstückoberfläche aus in ein Werkstück gebohrten Bohrloch. Die Erfindung betrifft weiter ein mit einer solchen Vorrichtung ausgestattetes Bohrgerät, insbesondere ein elektrisch angetriebenes Handbohrgerät, wie eine Bohrmaschine, eine Schlagbohrmaschine oder einen Bohrhammer. Außerdem betrifft die Erfindung ein Bohrverfahren, bei dem mit einem Bohrwerkzeug eines Bohrgeräts von einer Werkstückoberfläche aus ein Bohrloch in ein Werkstück gebohrt und das Erreichen einer voreingestellten Bohrlochtiefe von der Werkstüdcoberfläche aus festgestellt wird.

### Stand der Technik

Eine Vorrichtung der eingangs genannten Art, mit der sich das Erreichen einer voreingestellten Bohrlochtiefe auf elektromagnetischem Wege feststellen lässt, ist auf dem Gebiet der Handbohrgeräte wohlbekannt, siehe DE 28 38 968 A. Die bekannte Vorrichtung besteht aus einem Tiefenanschlag in Form einer langgestreckten Stange, die in einer zur Bohrachse parallelen Führungsbohrung eines am Bohrgerät montierbaren Zusätzgriffs verschiebbar ist. Zur Einstellung einer gewünschten Bohrlochtiefe wird dieser Tiefenanschlag mittels eines Spannmechanismus so in der Führungsbohrung arretiert, dass sein vorderes Ende in Bezug zum vorderen Ende des verwendeten Bohrwerkzeugs um die gewünschte Bohrlochtiefe nach hinten versetzt ist. Wenn das vordere Ende des Anschlags beim Bohren gegen die Werkstückoberfläche anschlägt, zeigt dies an, dass die gewünschte Bohrlochtiefe erreicht ist.

Beim Bohren von Bohrlöchern in Werkstücken mit empfindlichen Oberflächen können derartige mechanische Tiefenanschläge jedoch zu einer Beschädigung der Oberflächen führen, wenn ihr vorderes Ende bei Erreichen der gewünschten Bohrlochtiefe gegen die Oberfläche stößt. Außerdem sind die Tiefenanschlage bei Verwendung von Bohrwerkzeugen mit großer Länge nicht immer lang genug und zudem zumeist an der linken Seite des Bohrgeräts vorgesehen, so dass ihr vorderes Ende bei Annäherung an die voreingestellte Bohrlochtiefe zwar für Rechtshänder gut sichtbar ist, nicht jedoch für Linkshänder, da deren Sicht durch das Bohrfutter des Bohrgeräts behindert wird.

Aus einem Prospekt der Fa. Raytek ist bereits ein Infrarot-Thermometer zur berührungslosen Temperaturmessung an einer entfernten Objektoberfläche bekannt, bei dem mit Hilfe eines Laservisiers zwei sich kreuzende Laserstrahlen in Richtung der Objektoberfläche emittiert werden, um dem Benutzer durch die von den Laserstrahlen auf der Objektoberfläche erzeugten Lichtflecken die genaue Lage des Messpunkts anzuzeigen.

### Vorteile der Erfindung

Die erfindungsgemäße Vorrichtung mit den Merkmalen des Anspruchs 1, das erfindungsgemäße Bohrgerät mit den Merkmalen des Anspruchs 11 und das erfindungsgemäße Bohrverfahren mit den Merkmalen des Anspruchs 12 weisen demgegenüber den Vorteil auf, dass sich mit ihrer Hilfe das Erreichen der voreingestellten Bohrlochtiefe auf optischem Wege und damit berührungslos und ohne Beschädigung von empfindlichen Oberflächen feststellen lässt. Da die von den beiden Lichtstrahlenbündeln auf der Werkstückoberfläche in der Nähe der Bohrlochmündung erzeugten Lichtflecken zudem genau in der Blickrichtung des Benutzers liegen, sind sie sowohl für Links- und für Rechtshänder ohne Behinderung sichtbar. Außerdem kann mit Hilfe der Lichtflecken überprüft werden, ob das Bohrwerkzeug während des Bohrens senkrecht zur Oberfläche des Körpers ausgerichtet ist, da eine substantielle Schrägneigung des Bohrwerkzeugs zu einer wahmehmbaren Verzerrung der Lichtflecken führt.

In bevorzugter Ausgestaltung der Erfindung ist vorgesehen, dass die Einrichtungen zum Emittieren zweier konvergierender Lichtstrahlenbündel zwei auf dem Bohrgerät montierte oder montierbare Lichtquellen umfassen, vorzugsweise Laserdioden oder andere Laserlichtquellen, da diese auf der Oberfläche des Körpers scharf begrenzte und selbst in staubender Umgebung deutlich sichtbare Lichtflecken erzeugen. Grundsätzlich wäre es jedoch auch möglich, eine einzige Lichtquelle zu verwenden und das von dieser Lichtquelle emittierte Lichtstrahlenbündel mittels eines Strahlteilers oder dergleichen in zwei konvergierende Teilstrahlenbündel aufzuspalten.

Die beiden Lichtstrahlenbündel sind vorzugsweise unter dem gleichen spitzen Winkel zur Bohrachse ausgerichtet, jedoch könnte auch eines der beiden Lichtstrahlenbündel parallel und das andere Lichtstrahlenbündel unter einem spitzen Winkel zur Bohrachse ausgerichtet werden, um dasselbe Ergebnis zu erzielen.

Eine weitere bevorzugte Ausgestaltung der Erfindung sieht vor, dass sich die beiden Lichtstrahlenbündel vor Beginn des Bohrens zwischen den Lichtquellen und der Oberfläche kreuzen, vorzugsweise in einem Abstand von der Bohrwerkzeugspitze, welcher der gewünschten Bohrlochtiefe entspricht. Das hat dann zur Folge, dass für den Benutzer die auf der Oberfläche erzeugten und anfänglich getrennten Lichtflecke vor dem Erreichen der voreingestellten Bohrlochtiefe allmählich zu einem einzigen Lichtfleck verschmelzen, dessen Querschnitt beim Erreichen der voreingestellten Bohrlochtiefe ein Minimum aufweist und dem Querschnitt jedes einzelnen Lichtstrahlenbündels entspricht, wenn diese gemäß einer vorteilhaften Ausgestaltung in gleicher Entfernung vom Bohrgerät denselben Querschnitt aufweisen. Mit anderen Worten überlagern sich in diesem Fall die beiden Lichtflecken deckungsgleich, sobald die voreingestellte Bohrlochtiefe erreicht wird.

Durch entsprechende Einstellung des Winkels zwischen den beiden Lichtstrahlenbündeln zu Beginn des Bohrens können diese bei Erreichen der voreingestellten Bohrlochtiefe jedoch auch andere Lagebeziehungen einnehmen, wenn dies vom Hersteller gewünscht wird. Zum Beispiele könnte man die Lichtstrahlenbündel so ausrichten, dass die voreingestellte Bohrlochtiefe erreicht ist, wenn sich die beiden Lichtflecken an einem Punkt berühren.

Die Einstellung der gewünschten Bohrlochtiefe erfolgt bei der erfindungsgemäßen Vorrichtung vorzugsweise durch eine Vergrößerung oder Verkleinerung des von den beiden Lichtstrahlenbündeln eingeschlossenen Winkels, wobei das erstere zu einer Verkürzung der eingestellten Bohrlochtiefe und das letztere zu einer Verlängerung derselben führt. Die Veränderung des von den Lichtstrahtenbündeln eingeschlossenen Winkels kann beispielsweise durch Drehen von einer oder beiden Lichtquellen, im letzteren Fall in entgegengesetzten Richtungen, um eine zu einer Bohrwerkzeuglängsachse im Wesentlichen senkrechte Achse ertolgen.

Die Berücksichtigung von unterschiedlichen Bohrwerkzeuglängen erfolgt bevorzugt dadurch, dass mindestens eine der Lichtquellen in Bezug zum Bohrgerät in Richtung der Bohrwerkzeuglängsachse verschiebbar und entsprechend der Länge des Bohrwerkzeugs in unterschiedlichen Stellungen arretierbar ist. Dazu ist das Bohrgerät vorzugsweise mit einer zur Bohrachse parallelen Führung für die Vorrichtung versehen. Die Führung weist zweckmäßig eine mit einem Maßstab versehene Längenskala auf, so dass einer bestimmten Bohrwerkzeuglänge schnell eine zugehörige Arretierstellung der Vorrichtung zugeordnet werden kann.

Grundsätzlich wäre es jedoch auch möglich, die beiden Lichtquellen zur Einstellung der gewünschten Bohrlochtiefe in Richtung der Bohrwerkzeuglängsachse zu verschieben und unterschiedlichen Längen der verwendeten Bohrwerkzeuge durch eine entsprechende Einstellung des von den Lichtstrahlenbündeln eingeschlossenen Winkels Rechnung zu tragen.

Um eine erfindungsgemäße Vorrichtung zu schaffen, die sich möglichst einfach am Bohrgerät montieren und wieder abnehmen lässt, werden die beiden Lichtquellen zweckmäßig durch eine von der Energiequelle des Bohrgeräts getrennte Energiequelle gespeist, beispielsweise durch eine in die Vorrichtung integrierte Batterie. Alternativ dazu wäre es allerdings auch möglich, die beiden Lichtquellen der Vorrichtung durch die Energiequelle des Bohrgeräts zu speisen, wobei zweckmäßig durch die Montage der Vorrichtung eine elektrische Verbindung zu dieser Energiequelle hergestellt wird. Weiter ist es natürlich auch möglich, die beiden Lichtquellen ganz in das Bohrgerät zu integrieren.

### Zeichnungen

Die Erfindung wird nachfolgend in einem Ausführungsbeispiel anhand der zugehörigen Zeichnungen näher erläutert. Es zeigen:

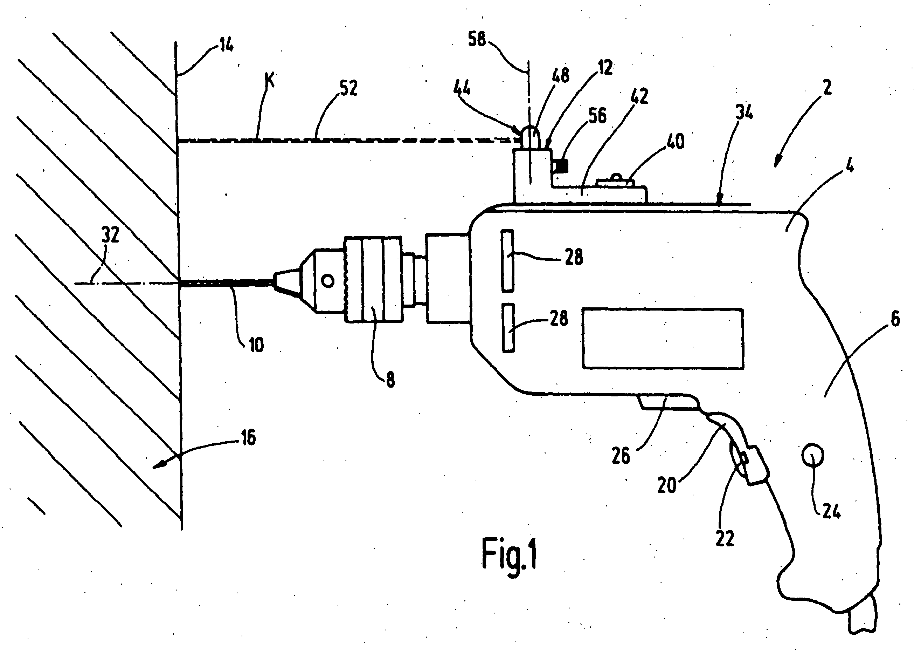

- Figur 1: eine Seitenansicht einer Bohrmaschine mit einer Vorrichtung zur Feststellung der Bohrlochtiefe.
- Figur 2: eine Draufsicht auf die Bohrmaschine aus Figur 1 zu Beginn eines Bohrvorgangs.
- Figur 3: eine Ansicht entsprechend Figur 2 jedoch bei Erreichen der voreingestellten Bohrlochtiefe.
- Figur 4: eine vergrößerte Ansicht der Werkstückoberfläche bei Betrachtung in Richtung des Pfeils A in Figur 1 und 2 zu Beginn des Bohrvorgangs.
- Figur 5: eine Ansicht entsprechend Figur 4 jedoch während des Bohrvorgangs.
- Figur 6: eine Ansicht entsprechend Figur 4 und 5, jedoch bei Erreichen der voreingestellten Bohrlochtiefe.

### Beschreibung des Ausführungsbeispiels

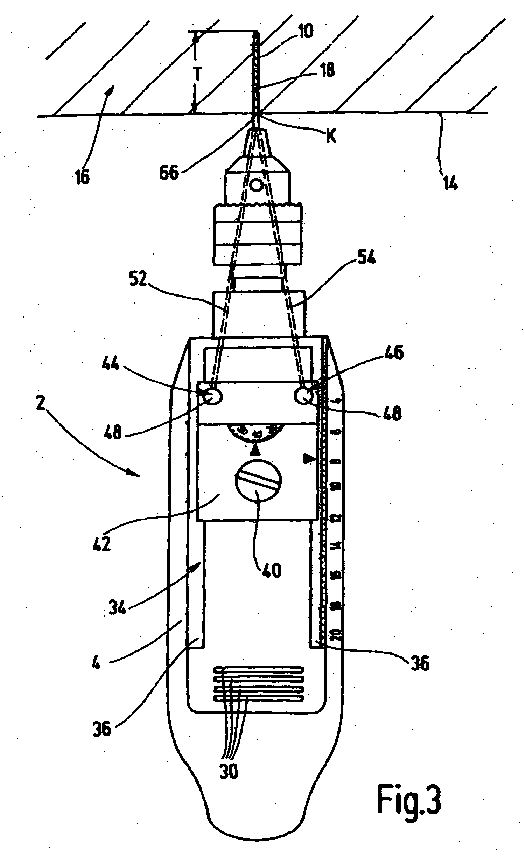

Die in der Zeichnung dargestellte Bohrmaschine 2 besteht im Wesentlichen aus einem Gehäuse 4 mit einem Griffteil 6, einem über das Gehäuse 4 überstehenden Bohrfutter 8 zum Einspannen eines Bohrers 10 oder eines anderen Bohrwerkzeugs, sowie einer abnehmbar auf der Oberseite des Gehäuses 4 angebrachten Vorrichtung 12 zur berührungsfreien Feststellung des Erreichens einer voreingestellten Bohrlochtiefe T in einem mit Hilfe der Bohrmaschine 2 und des Bohrers 10 in die ebene Oberfläche 14 einer Wand 16 oder eines anderen Werkstücks gebohrten Bohrloch 18 (Figur 3).

Wie bei den meisten handelsüblichen Bohrmaschinen ist das Gehäuse 4 am Griffteil 6 mit einem Ein-/Aus-Schalter 20, einem in den Ein-/Aus-Schalter 20 integrierten Stellrad 22 zur Einstellung der Drehgeschwindigkeit des Bohrfutters 8, einem Feststellknopf 24 für den Dauerbetrieb der Bohrmaschine 2 und einem Schalter 26 zur Umschaltung der Drehrichtung des Bohrfutters 8 versehen. Das Gehäuse 4 umschließt einen Elektromotor und ein Getriebe (nicht dargestellt) und ist zur Belüftung des Motors an seinen Seitenflächen und auf seiner Oberseite mit Lüftungsschlitzen 28 bzw. 30 versehen.

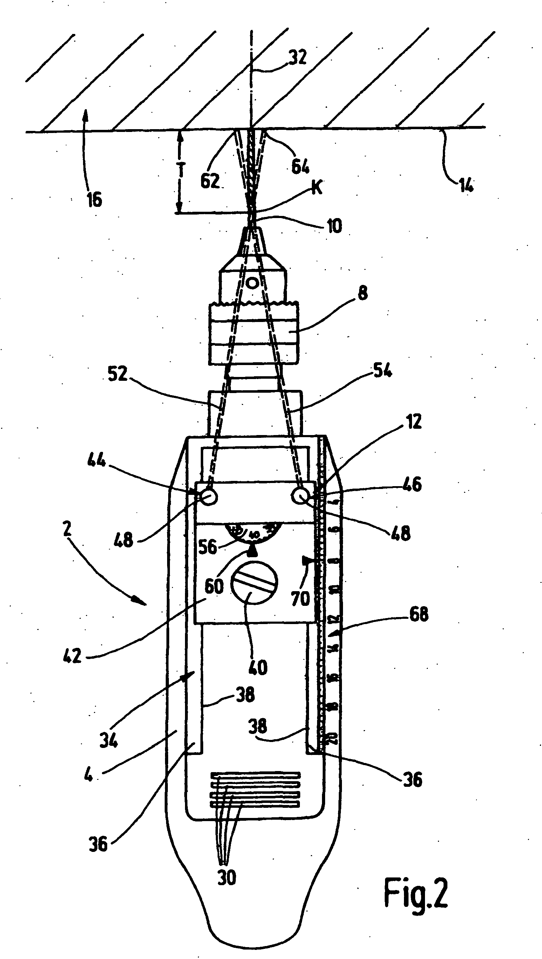

Wie am besten in Figur 2 dargestellt, weist das Gehäuse 4 im Unterschied zu handelsüblichen Bohrmaschinen auf seiner Oberseite eine in Richtung einer Bohrachse 32 verlaufende und auf der Seite des Griffteils 6 offene Führung 34 für die Vorrichtung 12 auf, in welche die als Zubehörteil ausgebildete Vorrichtung 12 eingeschoben werden kann. Die Führung 34 besteht im Wesentlichen aus zwei zueinander parallelen Winkelleisten 36, die nach oben über das Gehäuse 4 überstehen und an ihren einander zugewandten Innenseiten 38 unterschnitten sind.

Die Vorrichtung 12 besteht im Wesentlichen aus einem entlang der Führung 34 verschiebbaren und mit einer Klemmschraube 40 in Bezug zum Gehäuse 4 arretierbaren Sockel 42, der in der Nähe seines vorderen Endes zwei seitlichem Abstand voneinander und symmetrisch zur Bohrachse 32 angeordnete Laserlichtquellen 44, 46 trägt. Die beiden Laserlichtquellen 44, 46 werden zum Beispiel von zwei Laserdioden mit einer Leistung von weniger als 1 Watt gebildet, wie sie beispielsweise bei sogenannten Laserpointem Verwendung finden.

Die Stromversorgung der Laserlichtquellen 44, 46 mit Gleichstrom niedriger Spannung kann entweder über eine in ein Batteriefach im Sockel 42 eingesetzte Batterie (nicht dargestellt) erfolgen, oder alternativ über einen im Gehäuse 4 der Bohrmaschine 2 untergebrachten Transformator (nicht dargestellt), der den Laserlichtquellen 44, 46 über zwei verdeckt in den Unterschneidungen der Winkelleisten 36 verlaufende Stromabnehmerschienen Strom zuführt.

Die beiden Laserlichtquellen 44, 46 sind jeweils von einem über eine ebene horizontale Oberseite des Sockels 42 überstehenden Gehäuse 48 umgeben, von denen jedes auf seiner der Werkstückoberfläche 14 zugewandten Seite eine Lichtaustrittsöffnung für ein von der Laserlichtquelle 44, 46 erzeugtes Laserstrahlenbündel 52, 54 aufweist. Die Lichtaustrittsöffnungen der beiden Gehäuse 48 sind so angeordnet, dass die beiden Laserstrahlenbündel 52, 54 unter einem spitzen Winkel in Richtung der Werkstückoberfläche 14 konvergieren.

Jedes Gehäuse 48 ist in Bezug zum Sockel 42 um eine zu dessen Oberseite senkrechte Drehachse 58 drehbar gelagert. In der Nähe der beiden Gehäuse 48 ist ein Stellrad 56 vorgesehen, das über ein im Inneren des Sockels 42 angeordnetes Untersetzungsgetriebe (nicht dargestellt) so mit den beiden Gehäusen 48 verbunden ist, dass diese bei einer Drehung des Stellrades 56 um ein bestimmtes Winkelmaß, zum Beispiel 45 Grad, mit entgegengesetzter Drehrichtung um einen kleineren Winkel, zum Beispiel 5 Grad, um ihre jeweilige Drehachse 58 gedreht werden. Dadurch kann die Größe des Winkels zwischen den beiden Laserstrahlenbündeln 52, 54 verändert und deren Kreuzungspunkt K parallel zur Bohrachse 32 verschoben werden.

Das Stellrad 56 trägt an seinem Umfang eine Skala mit Maßangaben für die einstellbare Bohrlochtiefe. Zur Einstellung einer gewünschten Bohrlochtiefe T werden die beiden Gehäuse 48 mit dem Stellrad 56 gedreht, bis die gewünschte Bohrlochtiefe T von einem neben der Skala 60 angebrachten Pfeil 60 angezeigt wird. In dieser Einstellposition sind die beiden Laserstrahlenbündel 52, 54 so ausgerichtet, dass sie sich in einem der gewünschten Bohrlochtiefe T entsprechenden Abstand von der Spitze des Bohrers 10 schneiden.

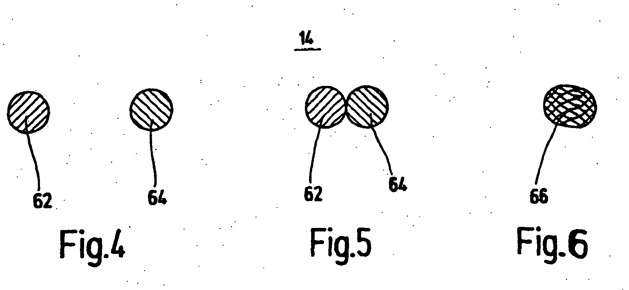

Wenn die Spitze des Bohrers 10 bei Beginn des Bohrvorgangs gegen die Werkstückoberfläche 14 anliegt, erzeugen die beiden Laserstrahlenbündel 52, 54 auf der Werkstückoberfläche 14 zwei in horizontalem Abstand voneinander oberhalb der Bohrachse 32 angeordnete getrennte Lichtflecken 62, 64, wie am besten in den Figuren 2 und 4 dargestellt. Wenn die Bohrachse 32 senkrecht zur Werkstückoberfläche 14 ausgerichtet ist, weisen beide Lichtflecken 62, 64 einen nahezu kreisförmigen Umriss auf.

Wenn der Bohrer 10 beim anschließenden Bohren des Bohrlochs 18 mit seiner Spitze in das Werkstück 16 eindringt, nähern sich die beiden Lichtflecken 62, 64 proportional zum Bohrfortschritt aneinander an, bis sie sich zuerst berühren, wie in Figur 5 dargestellt, und sich dann immer mehr überlagern. Sobald die gewünschte voreingestellte Bohrlochtiefe T erreicht ist, verschmelzen die beiden Lichtflecken 62, 64 zu einem einzigen kreisrunden Lichtfleck 66, wie in Figur 3 und 6 dargestellt, wodurch dem Benutzer das Erreichen der voreingestellten Bohrlochtiefe T angezeigt wird.

Da sich bei gleicher Winkel- oder Stellradeinstellung die beiden Laserstrahlenbündel 52, 54 bei Verwendung unterschiedlich langer Bohrer 10 in unterschiedlichen Abständen von der Spitze des Bohrers 10 kreuzen, wird die Länge des verwendeten Bohrwerkzeugs durch axiale Verschiebung der Vorrichtung 12 entlang der Führung 34 des Gehäuses 4 berücksichtigt.

Zur Ermittlung der richtigen Arretierstellung der Vorrichtung ist die Führung 34 an einer Seite mit einer Maßstabsskala 68 mit Bohrwerkzeuglängenangaben versehen. Die richtige Arretierstellung der Vorrichtung 12 ist erreicht, wenn eine Pfeilmarkierung 70 auf dem Sockel 42 mit einer der Länge des verwendeten Bohrwerkzeugs 10 entsprechenden Längenangabe auf der Maßstabsskala 68 neben der Führung 34 übereinstimmt.

## Patentansprüche

1. Vorrichtung zur Feststellung des Erreichens einer voreingestellten Bohrlochtiefe in einem mit einem Bohrwerkzeug eines Bohrgeräts von einer Werkstückoberfläche aus in ein Werkstück gebohrten Bohrloch, **gekennzeichnet durch** Einrichtungen (44, 46) zum Emittieren zweier konvergierender Lichtstrahlenbündel (52, 54) vom Bohrgerät (2) in Richtung der Werkstückoberfläche (14), um **durch** Auswertung der Lagebeziehung von zwei von den Lichtstrahlenbündein (52, 54) auf der Werkstückoberfläche erzeugten Lichtflecken (62, 64) das Erreichen der voreingestellten Bohrlochtiefe (T) festzustellen.

2. Vorrichtung nach Anspruch 1, **dadurch gekennzeichnet, dass** ein von den beiden Lichtstrahlenbündeln (52, 54) eingeschlossener Winkel zur Einstellung der Bohrlochtiefe (T) veränderbar ist.

3. Vorrichtung nach einem der vorangehenden Ansprüche, **dadurch gekennzeichnet, dass** die Einrichtungen (44, 46) zum Emittieren zweier konvergierender Lichtstrahlenbündel zwei auf dem Bohrgerät (2) montierte oder montierbare Lichtquellen (44, 46) umfassen.

4. Vorrichtung nach einem der vorangehenden Ansprüche, **dadurch gekennzeichnet, dass** die Lichtquellen (44, 46) Laserlicht emittieren.

5. Vorrichtung nach einem der vorangehenden Ansprüche, **dadurch gekennzeichnet, dass** mindestens eine der beiden Lichtquellen (44, 46) um eine zu einer Bohrachse (32) im Wesentlichen senkrechte Achse (58) drehbar ist.

6. Vorrichtung nach einem der vorangehenden Ansprüche, **gekennzeichnet durch** Einrichtungen (56) zum Drehen von mindestens einer der beiden Lichtquellen (44, 46) mit einer Skala zur Einstellung der Bohrlochtiefe.

7. Vorrichtung nach einem der vorangehenden Ansprüche, **dadurch gekennzeichnet, dass** die Lichtquellen (44, 46) eine von einer Energiequelle des Bohrgeräts (2) getrennte Energiequelle aufweisen.

8. Vorrichtung nach einem der vorangehenden Ansprüche, **dadurch gekennzeichnet, dass** die Lichtquellen (44, 46) bei der Montage auf dem Bohrgerät (2) an eine Energiequelle desselben angeschlossen werden.

9. Vorrichtung nach einem der vorangehenden Ansprüche, **dadurch gekennzeichnet, dass** mindestens eine der Lichtquellen (44, 46) zur Anpassung an unterschiedliche Bohrwerkzeuglängen in Bezug zum Bohrgerät (2) in Richtung einer Bohrachse (32) verschiebbar und in unterschiedlichen Stellungen arretierbar ist.

10. Vorrichtung nach Anspruch 9, **dadurch gekennzeichnet, dass** die Lichtquelle (44, 46) in einer Führung (34) verschiebbar ist, die mit Einrichtungen (68, 70) zur Bestimmung der Arretierstellung der Lichtquelle (44, 46) in Abhängigkeit von der jeweiligen Bohrwerkzeuglänge versehen ist.

11. Bohrgerät, insbesondere elektrisch angetriebenes Handbohrgerät, **gekennzeichnet durch** eine Vorrichtung nach einem der vorangehenden Ansprüche.

12. Bohrverfahren, bei dem mit einem Bohrwerkzeug eines Bohrgeräts von einer Werkstückoberfläche aus ein Bohrloch in ein Werkstück gebohrt und das Erreichen einer voreingestellten Bohrlochtiefe von der Werkstückoberfläche aus festgestellt wird, **dadurch gekennzeichnet, dass** zwei konvergierende Lichtstrahlenbündel (52, 54) vom Bohrgerät (2) in Richtung der Werkstückoberfläche (14) emittiert werden, um durch Auswertung der Lagebeziehung zweier von den Lichtstrahlenbündeln (52, 54) auf der Werkstückoberfläche (14) erzeugter Lichtflecken (62, 64) das Erreichen der voreingestellten Bohrlochtiefe (T) festzustellen.

13. Bohrverfahren nach Anspruch 12, **dadurch gekennzeichnet, dass** die beiden Lichtstrahlenbündel (52, 54) derart vom Bohrgerät (2) in Richtung der Werkstückoberfläche (14) emittiert werden, dass sie sich vor Erreichen der voreingestellten Bohrlochtiefe (T) zwischen dem Bohrgerät (2) und der Oberfläche (14) kreuzen.

14. Bohrverfahren nach einem der vorangehenden Ansprüche, **dadurch gekennzeichnet, dass** die beiden Lichtstrahlenbündel (52, 54) derart vom Bohrgerät (2) in Richtung der Werkstückoberfläche (14) emittiert werden, dass sich die auf der Oberfläche (14) erzeugten Lichtflecken (62, 64) bei Erreichen der voreingestellten Bohrlochtiefe (T) deckungsgleich überlagern.

15. Bohrverfahren nach einem der vorangehenden Ansprüche, **dadurch gekennzeichnet, dass** zur Einstellung einer gewünschten Bohrlochtiefe ein von den beiden Lichtstrahlenbündein (52, 54) eingeschlossener Winkel verändert wird.

## Claims

1. Device for detecting the point at which a preset drill hole depth is reached in a drill hole drilled in a workpiece from a workpiece surface using a drilling tool of a drilling implement, **characterized by** means (44, 46) for emitting two convergent light beams (52, 54) from the drilling implement (2) in the direction of the workpiece surface (14) in order to detect the point at which the preset drill hole depth (T) is reached by evaluating the positional relationship between two light spots (62, 64) produced on the workpiece surface by the light beams (52, 54).

2. Device according to Claim 1, **characterized in that** an angle enclosed by the two light beams (52, 54) can be varied for setting the drill hole depth (T).

3. Device according to either of the preceding claims, **characterized in that** the means (44, 46) for emitting two convergent light beams comprise two light sources (44, 46) which are mounted or can be mounted on the drilling implement (2).

4. Device according to one of the preceding claims, **characterized in that** the light sources (44, 46) emit laser light.

5. Device according to one of the preceding claims, **characterized in that** at least one of the two light sources (44, 46) can be rotated about an axis (58) essentially perpendicular to a drilling axis (32).

6. Device according to one of the preceding claims, **characterized by** means (56) intended for rotating at least one of the two light sources (44, 46) and having a scale for setting the drill hole depth.

7. Device according to one of the preceding claims, **characterized in that** the light sources (44, 46) have an energy source separate from an energy source of the drilling implement (2).

8. Device according to one of the preceding claims, **characterized in that** the light sources (44, 46) are connected to an energy source of the drilling implement (2) when they are mounted on the latter.

9. Device according to one of the preceding claims, **characterized in that** at least one of the light sources (44, 46), for adaptation to different drilling tool lengths, can be displaced relative to the drilling implement (2) in the direction of a drilling axis (32) and can be locked in different positions.

10. Device according to Claim 9, **characterized in that** the light source (44, 46) can be displaced in a guide (34) which is provided with means (68, 70) for determining the locking position of the light source (44, 46) as a function of the respective drilling tool length.

11. Drilling implement, in particular an electrically driven hand-operated drilling implement, **characterized by** a device according to one of the preceding claims.

12. Drilling method in which a drill hole is drilled in a workpiece from a workpiece surface using a drilling tool of a drilling implement and the point at which a preset drill hole depth from the workpiece surface is reached is detected, **characterized in that** two convergent light beams (52, 54) are emitted from the drilling implement (2) in the direction of the workpiece surface (14) in order to detect the point at which the preset drill hole depth (T) is reached by evaluating the positional relationship between two light spots (62, 64) produced on the workpiece surface (14) by the light beams (52, 54).

13. Drilling method according to Claim 12, **characterized in that** the two light beams (52, 54) are emitted from the drilling implement (2) in the direction of the workpiece surface (14) in such a way that they intersect between the drilling implement (2) and the surface (14) before the preset drill hole depth (T) is reached.

14. Drilling method according to one of the preceding claims, **characterized in that** the two light beams (52, 54) are emitted from the drilling implement (2) in the direction of the workpiece surface (14) in such a way that the light spots (62, 64) produced on the surface (14) congruently overlap when the preset drill hole depth (T) is reached.

15. Drilling method according to one of the preceding claims, **characterized in that**, to set a desired drill hole depth, an angle enclosed by the two light beams (52, 54) is varied.

## Revendications

1. Dispositif de détection de la profondeur de perçage préréglée d'une perceuse équipée d'un outil de perçage, par rapport à la surface de la pièce d'un trou percé dans la pièce,
**caractérisé par**
des installations (44, 46) émettant deux faisceaux lumineux convergents (52, 54) à partir de la perceuse (2) en direction de la surface (14) de la pièce pour qu'en exploitant la relation de position de deux taches lumineuses (62, 64) générées à la surface de la pièce par les faisceaux lumineux (52, 54), on puisse constater que la profondeur de perçage (T) préréglée est atteinte.

2. Dispositif selon la revendication 1,
**caractérisé en ce que**
l'angle compris entre les deux faisceaux lumineux (52, 54) est réglable pour régler la profondeur de perçage (T).

3. Dispositif selon l'une quelconque des revendications précédentes,
**caractérisé en ce que**
les installations (44, 46) émettant deux faisceaux lumineux convergents comportent deux sources lumineuses (44, 46) installées dans ou sur la perceuse (2).

4. Dispositif selon l'une quelconque des revendications précédentes,
**caractérisé en ce que**
les sources lumineuses (44, 46) émettent de la lumière laser.

5. Dispositif selon l'une quelconque des revendications précédentes,
**caractérisé en ce qu'**
au moins l'une des deux sources lumineuses (44, 46) peut tourner autour d'un axe (58) essentiellement perpendiculaire à l'axe de perçage (32).

6. Dispositif selon l'une quelconque des revendications précédentes,
**caractérisé par**
des installations (56) pour tourner au moins l'une des deux sources lumineuses (44, 46) avec une échelle pour régler la profondeur de perçage.

7. Dispositif selon l'une quelconque des revendications précédentes,
**caractérisé en ce que**
les sources lumineuses (44, 46) ont une source d'énergie distincte de la source d'énergie de la perceuse (2).

8. Dispositif selon l'une quelconque des revendications précédentes,
**caractérisé en ce que**
les sources lumineuses (44, 46) sont reliées à la source d'énergie de la perceuse (2) lors de leur montage.

9. Dispositif selon l'une quelconque des revendications précédentes,
**caractérisé en ce qu'**
au moins l'une des sources lumineuses (44, 46) peut être coulissée ou bloquée dans différentes positions pour s'adapter à différentes longueurs d'outil de perçage par rapport à la perceuse (2) en direction de l'axe de perçage (32).

10. Dispositif selon la revendication 9,
**caractérisé en ce que**
la source lumineuse (44, 46) peut coulisser dans un guide (34) muni d'installations (68, 70) pour déterminer la position de blocage des sources lumineuses (44, 46) en fonction de la longueur respective de l'outil de perçage.

11. Perceuse notamment perceuse électroportative,
**caractérisée par**
un dispositif selon l'une quelconque des revendications précédentes.

12. Procédé de perçage selon lequel on perce un trou dans une pièce à l'aide de l'outil de perçage d'une perceuse en partant de la surface de la pièce et on détecte le fait que l'on atteint la profondeur de perçage préréglée par rapport à la surface de la pièce,
**caractérisé en ce que**
la perceuse (2) émet deux faisceaux de rayon lumineux convergents (52, 54) en direction de la surface (14) de la pièce, et on exploite la relation de position des taches lumineuses (62, 64) générées par les faisceaux de rayon lumineux (52, 54) à la surface (14) de la pièce pour constater que l'on atteint la profondeur de perçage (T) préréglée.

13. Procédé de perçage selon la revendication 12,
**caractérisé en ce que**
les deux faisceaux de rayon lumineux (52, 54) sont émis par la perceuse (2) en direction de la surface (14) de la pièce pour se croiser avant que l'on atteigne la profondeur de perçage (T) préréglée entre la perceuse (2) et la surface (14) de la pièce.

14. Procédé de perçage selon l'une quelconque des revendications précédentes,
**caractérisé en ce que**
les deux faisceaux lumineux (52, 54) sont émis par la perceuse (2) en direction de la surface (14) de la pièce pour que les taches lumineuses (62, 64) formées à la surface (14) de la pièce se superposent lorsqu'on atteint la profondeur de perçage (T) préréglée.

15. Procédé de perçage selon l'une quelconque des revendications précédentes,
**caractérisé en ce qu'**
on modifie l'angle compris entre les deux faisceaux lumineux (52, 54) pour régler la profondeur de perçage souhaitée.
